(19) Europäisches Patentamt
European Patent Office
Office européen des brevets

(11) Veröffentlichungsnummer: **0 457 777 B1**

(12) # EUROPÄISCHE PATENTSCHRIFT

(45) Veröffentlichungstag der Patentschrift: **25.05.94**

(51) Int. Cl.[5]: **D06P 1/613**, D06P 1/651, D06P 1/62, D06P 1/52

(21) Anmeldenummer: **90902236.0**

(22) Anmeldetag: **20.01.90**

(86) Internationale Anmeldenummer: **PCT/EP90/00112**

(87) Internationale Veröffentlichungsnummer: **WO 90/09478 (23.08.90 90/20)**

(54) **VERFAHREN ZUM FÄRBEN UND BEDRUCKEN VON MISCHGEWEBEN AUS POLYESTER UND NATÜRLICHEN FASERMATERIALIEN.**

(30) Priorität: **08.02.89 DE 3903667**
**08.02.89 DE 3903666**

(43) Veröffentlichungstag der Anmeldung: **27.11.91 Patentblatt 91/48**

(45) Bekanntmachung des Hinweises auf die Patenterteilung: **25.05.94 Patentblatt 94/21**

(84) Benannte Vertragsstaaten: **AT BE CH DE FR GB IT LI NL**

(56) Entgegenhaltungen:
**FR-A- 2 373 633**
**US-A- 4 168 145**
**US-A- 4 463 165**

(73) Patentinhaber: **CASSELLA Akfiengesellschaft**
**Hanauer Landstrasse 526**
**D-60386 Frankfurt(DE)**

(72) Erfinder: **BÜHLER, Ulrich**
**Kastanienweg 8**
**W-8755 Alzenau(DE)**
Erfinder: **HOFMANN, Klaus**
**Meerholzerstrasse 50**
**W-6000 Frankfurt am Main 61(DE)**
Erfinder: **KRUSE, Hubert**
**Hölderlinstrasse 12**
**W-6240 Königstein 1(DE)**
Erfinder: **KÜHLWEIN, Jürgen**
**Mainstrasse 21**
**W-6050 Offenbach am Main(DE)**
Erfinder: **STECKELBERG, Willi**
**Goldgrabenstrassse 24**
**W-6238 Hofheim/Ts.(DE)**

(74) Vertreter: **Urbach, Hans-Georg, Dr. et al**
**CASSELLA AKTIENGESELLSCHAFT,**
**Patentabteilung,**
**Hanauer Landstrasse 526**
**D-60386 Frankfurt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Beim Färben und Bedrucken von Polyester-Cellulose- bzw. Polyester-Woll-Mischgeweben wird in der Regel der Polyesteranteil des Mischgewebes mit Dispersionsfarbstoffen und der Cellulose- bzw. Wollanteil mit Reaktiv-, Direkt-, Entwicklungs-, Leukoküpenester-, Küpen-, Schwefelküpen- oder Schwefelfarbstoffen gefärbt oder bedruckt.

Schwierigkeiten bereitet dabei der Anteil an Dispersionsfarbstoff, der beim Färben des Polyesteranteils nicht vollständig auf diesen übergeht, sondern auf der Cellulose- oder Wollfaser verbleibt und diese anschmutzt, was sich negativ auf die Brillanz der Färbung und ihre Echtheiten auswirkt. Der dort verbleibende Farbstoff hat eine andere, trübere Nuance als der in der Polyesterfaser gelöste. Dies macht sich insbesondere bei hellen oder brillanten Färbungen negativ bemerkbar. Aufgrund seiner ungenügenden Affinität zur Cellulose- oder Wollfaser verschlechtert er auch die Naß-, Reib- und Lichtechtheiten der Färbung. Dies äußert sich z.B. bei nachfolgenden Waschprozessen, z.B. der Haushaltswäsche des Verbrauchers, dadurch, daß immer wieder Dispersionsfarbstoff ausblutet und andersfarbige oder gar weiße Begleitgewebe anfärbt. Ein besonderes Problem ist dies bei tiefen Färbungen, zu deren Erzielung Farbstoffüberschüsse eingesetzt werden, bei Färbungen, bei denen der Cellulose- bzw. Wollanteil ungefärbt bleiben soll oder bei Drucken, wo es verschiedenfarbig bedruckte oder aber bedruckte und unbedruckte Stellen gibt.

Eine weitere Schwierigkeit beim Färben oder Bedrucken von derartigen Mischmaterialien rührt von den Dispergiermitteln her, mit deren Hilfe die Dispersionsfarbstoffe oder die Farbstoffpräparationen, die zu einem Teil Dispersionsfarbstoffe enthalten, hergestellt werden. Diese bevorzugt anionischen Dispergiermittel sind je nach ihrer Herstellung hellbraune bis schwarze Produkte, die eine Affinität zur Cellulose oder Wolle haben und sich leicht dort ablagern und wiederum insbesondere bei hellen und brillanten Färbungen ein Abtrüben bewirken.

Diesem Problem wirkt man i.a. durch Nachwaschen der Färbung entgegen, bei dem die anschmutzenden Partikel vom Gewebe entfernt werden. Dies er Waschprozeß ist zeit-und kostenaufwendig. Da das Nachwaschen der Färbung bei Temperaturen in der Nähe der Färbetemperatur durchgeführt wird, kann dabei in die Waschflotte gelangter Dispersionsfarbstoff den Polyesteranteil irreversibel anschmutzen. Wird die Nachreinigung reduktiv oder oxidativ durchgeführt oder erfolgt die Färbung des Celluloseanteils in reduktivem Milieu, wird der anschmutzende Dispersionsfarbstoff zerstört, und es können Spaltprodukte entstehen, die ihrerseits wieder anschmutzen.

Zur Vermeidung dieser Schwierigkeiten wurde in der Patentliteratur die Verwendung von ionischen oder aber nichtionogenen polymeren Hilfsmitteln, die beim Färben oder aber beim Nachwaschen eingesetzt werden, vorgeschlagen und z.B. in der DE-A-34 46 922, DE-C 3 414 306, JP-A-47-39309, JP-A-49-117782, JP-A-49-117783 oder JP-A-51-119886 beschrieben.

Es wurde nun überraschenderweise gefunden, daß das Anschmutzen des Cellulose- oder Wollanteils durch Dispersionsfarbstoffpräparationen beim Färben oder Bedrucken von Polyester-Cellulose- oder Polyester-Wolle-Mischgeweben verhindert oder aber in hohem Maße unterdrückt wird, wenn beim Färben und Bedrucken der Mischgewebe die Färbebäder, Klotzflotten bzw. Druckpasten eine oder mehrere Verbindungen der allgemeinen Formel I enthalten.

Die vorliegende Erfindung betrifft somit die Verwendung von Verbindungen der allgemeinen Formel I

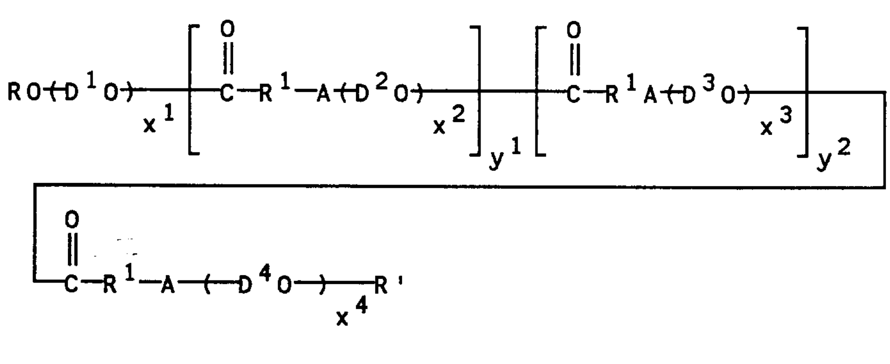

(I)

enthalten sind, worin

R und R' unabhängig voneinander Wasserstoff, lineares oder verzweigtes Alkyl mit 1 bis 18 Kohlenstoffatomen, das gegebenenfalls substituiert ist durch Chlor, Brom oder Alkoxy mit 1 bis 4 Kohlenstoffatomen; Cyclopentyl; Cyclohexyl; Allyl; Methallyl; Acryl; Methacryl; Crotyl; Phenyl, das mono- oder disubstituiert ist durch Chlor, Brom, Methyl, Alkoxy mit 1 bis 4 Kohlenstoffatomen,

$$-(-D^5O-)_{x^5}-R''$$

worin $x^5$ für eine Zahl von 1 bis 10 steht; Benzyl oder COR", wobei R" eine der Bedeutungen von R haben kann, aber von diesem unabhängig ist, bedeuten,
$D^1$ bis $D^5$ lineare ($C_2$-$C_{10}$)- oder cyclische ($C_3$-$C_{10}$)-Alkylen-Einheiten, die unsubstituiert oder durch ($C_1$-$C_4$)-Alkyl, ($C_1$-$C_4$)-Alkoxy oder

$$-CH_2-(-OCH_2CH_2-)_p-OR,$$

worin p für eine Zahl von 0-10 steht, substituiert sind, oder

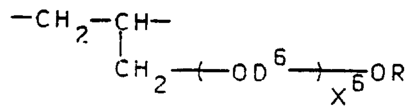

worin $D^6$ unabhängig von $D^1$ bis $D^5$ die gleichen Bedeutungen wie diese hat und $x^6$ eine Zahl von 1 bis 100 ist, bedeuten, wobei alle Gruppen $D^1$ bis $D^5$ innerhalb eines idealisiert dargestellten Moleküls der allgemeinen Formel I beliebig vertauscht sein können und somit einer statistischen Verteilung unterliegen,
$X^1$ bis $X^5$ unabhängig voneinander eine Zahl von 1 bis 100 bedeuten.
A

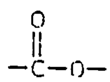

oder

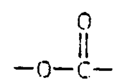

bedeutet,
$R^1$ 1.4-Phenylen, 1.2-Phenylen, 1.3-Phenylen, 1.4-Naphtylen, 1.8-Naphtylen, 2.2'-, 2.4'-, oder 4.4'-Biphenylen, lineares oder verzweigtes Alkylen mit 2 bis 18 Kohlenstoffatomen oder cyclisches Alkylen mit 4 bis 6 Kohlenstoffatomen, wobei alle Reste $R^1$ gegebenenfalls substituiert sein können durch wenigstens eine Gruppe $SO_3M$ oder COOM, worin M für Wasserstoff, ein Kation aus der Reihe der Alkalimetalle oder ein Kation aus der Reihe Ammoniak, primäres, sekundäres, tertiäres oder quartäres Amin steht; oder durch

$$-(-OD^1)_{x^1}-OR \;;$$

$$-CH_2-(-OCH_2-CH_2)_p-OR\,;$$

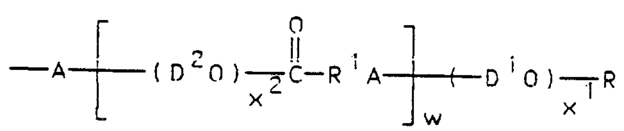

oder

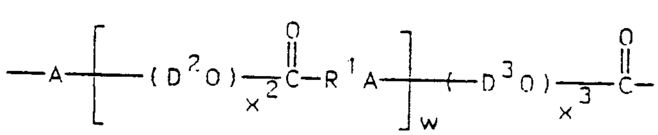

wobei der letzte Rest zwei Reste $R^1$ gleichzeitig substituiert, und w eine Zahl von 1 bis 5 ist, bedeutet, wobei die Reste $R^1$ einer statistischen Verteilung unterliegen und
$y^1$ und $y^2$ im Rahmen der Bedingung, daß die Summe $y^1$ + $y^2$ 0 bis 20 ist, unabhängig voneinander eine

Zahl von 0 bis 20 bedeuten,
als Färbereihilfsmittel beim Färben und Bedrucken von Mischgeweben aus Polyester und natürlichen Fasermaterialien zur Verhinderung der Anschmutzung des Anteils an natürlichen Fasermaterialien durch Dispersionsfarbstoff.

In der allgemeinen Formel I können die für R, R' und R'' stehenden linearen oder verzweigten, gegebenenfalls substituierten Alkylgruppen mit 1 bis 18 Kohlenstoffatomen beispielsweise Methyl, Ethyl, n-Propyl, i-Propyl, n-Butyl, i-Butyl, sek.Butyl, tert.Butyl, n-Pentyl, 3-Methylbutyl, Pentyl-3, n-Hexyl, 2-Ethylbutyl, n-Heptyl, i-Heptyl, Octyl-2, 2-Ethylhexyl, i-Nonyl, n-Decyl, i-Decyl, n-Dodecyl, n-Hexadecyl, n-Octadecyl oder aber Mischungen $(C_4\text{-}C_9)$- oder $(C_8\text{-}C_9)$Alkyl, $(C_6\text{-}C_{10})$- oder $(C_8\text{-}C_{10})$-Alkyl, $(C_{10}\text{-}C_{12})$-Alkyl, $(C_{12}\text{-}C_{14})$-Alkyl, $(C_{12}\text{-}C_{18})$Alkyl, $(C_{13}\text{-}C_{18})$-Alkyl oder $(C_{14}\text{-}C_{18})$-Alkyl.

Entsprechend substituierte Reste sind beispielsweise 2-Chlorethyl, 3-Chlorpropyl, 1-Chlorpropyl-2, 2-Bromethyl oder 3-Methoxybutyl.

Bevorzugt stehen für R, R' und R'' Wasserstoff und Alkylreste mit 1 bis 8 Kohlenstoffatomen, besonders bevorzugt Wasserstoff und Methyl.

Für $D^1$ bis $D^6$ stehen bevorzugt Ethylen, 1.2-Propylen, 1.2-Butylen, 1.2-Hexamethylen, 3-Methoxy-1.2-Propylen , 1.3-Propylen, 1.4-Butylen, 1.5-Pentylen, 1.6-Hexamethylen, 1.2- und 1.4-Demethylen-cyclohexan.

Besonders bevorzugt stehen für $D^1$ bis $D^6$ Ethylen, 1.2-Propylen und 1.4-Butylen.

Bevorzugte Werte für $x^1$ und $x^3$ bis $x^6$ sind 1 bis 80. Bevorzugte Werte für $x^2$ sind 1 bis 4.

Für $R^1$ stehendes lineares oder verzweigtes Alkylen mit 2 bis 18 Kohlenstoffatomen ist beispielsweise Ethylen, n-Propylen, i-Propylen, n-Butylen, i-Butylen, sek.-Butylen, tert.Butylen, n-Pentylen, 3-Methylbutylen, n-Hexylen, 2-Ethylbutylen, n-Heptylen, i-Heptylen, Octylen, 2-Ethylhexylen, i-Nonylen, n-Decylen, i-Decylen, n-Dodecylen, n-Hexadecylen, n-Octadecylen oder aber Mischungen $(C_4\text{-}C_9)$- oder $(C_8\text{-}C_9)$-Alkylen, $(C_6\text{-}C_{10})$- oder $(C_8\text{-}C_{10})$-Alkylen, $(C_{10}\text{-}C_{12})$-Alkylen, $(C_{12}\text{-}C_{14})$-Alkylen, $(C_{12}\text{-}C_{18})$-Alkylen, $(C_{13}\text{-}C_{18})$-Alkylen oder $(C_{14}\text{-}C_{18})$-Alkylen.

Bevorzugt stehen für $R^1$ die aromatischen Reste, besonders bevorzugt 1,4-Phenylen, 1,3-Phenylen und 1,2-Phenylen.

Bevorzugte Werte für $y^1$ und $y^2$ sind 1 bis 10.

Die erfindungsgemäß einzusetzenden Verbindungen der allgemeinen Formel I sind dem Stand der Technik entsprechend herstellbar, wie er z.B. aus US-A-3416952, US-A-4463165, US-A-4736014 oder US 684511 hervorgeht. Die in der US-A-4463165 beschriebenen Verbindungen können als Hilfsmittel zur Verbesserung textiler Eigenschaften von hydrophoben Fasermaterialien eingesetzt werden, wobei ihre Anwendung auch mit dem Färbeprozeß verbunden werden kann.

Der Polyester-Anteil der Polyester-Cellulose- bzw. Polyester-Wolle-Mischgewebe kann mit Dispersionsfarbstoffen nach dem sogenannten Ansziehverfahren unter HT-Bedingungen oder bei Kochtemperatur unter Carrierzusatz, der Cellulose-oder Wollanteil der Mischgewebe kann mit Reaktiv-, Direkt-, Entwicklungs-, Küpen-, Leukoküpenester-, Schwefelküpen-und Schwefel-bzw. mit Reaktiv-und Direktfarbstoffen aus wässriger Flotte gefärbt werden. Die Farbstoffe können jedoch auch nach dem sogenannten Kontinueverfahren durch Imprägnieren des Gewebes mit einer wässrigen Klotzflotte, die diese Farbstoffe enthält, und anschließendes Fixieren dieser Farbstoffe auf der Faser durch Thermosolieren, Dämpfen oder einen sogenannten Luftgang auf die Faser aufgebracht werden. Dabei ist es prinzipiell möglich, die Farbstoffe für den Polyesteranteil und für den Cellulose- bzw. Wollanteil gemeinsam oder aber getrennt zu klotzen.

Mit einer separaten Klotzflotte können während des Färbens auf das Gewebe Chemikalien wie z.B. Alkali- und Reduktionsmittel aufgebracht werden. Durch eine chemische Reaktion fixiert das Alkali den Reaktivfarbstoff auf der Cellulose- oder Wollfaser, das Reduktionsmittel überführt den Küpen- bzw. Schwefelküpenfarbstoff in eine zur Cellulosefaser affinen Form.

Bei Bedrucken des Mischgewebes wird der mittels der Druckpaste auf das Gewebe aufgebrachte Dispersionsfarbstoff in der Polyesterfaser durch HT-Dampf, Druckdampf oder Trockenhitze fixiert.

Prinzipiell ist es möglich, den Polyesteranteil und anschließend den Cellulose- bzw. Wollanteil zu färben. Es kann jedoch auch umgekehrt zuerst der Cellulose- bzw. Wollanteil und erst dann der Polyesteranteil gefärbt werden.

Weiterhin gibt es Färbeverfahren, bei denen ein- oder zweibadig bzw. ein- oder zweistufig gefärbt wird. Ausführliche Angaben zu den Einzelheiten finden sich z.B. in Melliand Textilberichte 61, 261 (1980); Melliand Textilberichte 64, 290, 357 (1983) sowie Chemiefasern/Textilindustrie 1974, 756.

Die Mengen an Verbindungen der allgemeinen Formel I, die nach dem erfindungsgemäßen Verfahren den Färbeklotzflotten zugesetzt werden, richten sich naturgemäß nach der Anschmutzungstendenz der eingesetzten Dispersionsfarbstoffpräparationen, nach dem Farbstoffgehalt in der Färbeflotte bzw. Druckpaste, nach dem Abquetscheffekt und nach dem Anteil an Cellulose oder Wolle im Mischgewebe. Wenn Dispersionsfarbstoffpräparationen aus stark anschmutzenden Farbstoffen und darüber hinaus stark anschmutzenden Dispergiermitteln eingesetzt werden, wenn hohe Farbstoffmengen eingesetzt werden, wenn die Flottenaufnahme hoch ist und wenn der Cellulose- oder Wollanteil des Mischgewebes bei gleicher Dispersionsfarbstoff-Einsatzmenge steigt, müssen größere Mengen der Verbindungen der allgemeinen Formel I eingesetzt werden.

In der Regel schwanken die Mengen an Verbindungen der allg. Formel I in der Klotzflotte zwischen 0,1 und 50 g/l, vorzugsweise zwischen 1 bis 20 g/l. Besonders bevorzugt werden 1 bis 10 g/l eingesetzt.

Bei Färbungen aus wäßriger Färbeflotte richtet sich die Menge ebenfalls nach der Anschmutzungstendenz des Dispersionsfarbstoffs und seiner Dispergiermittel, nach der Farbstoffkonzentration in der Färbeflotte, also nach dem Reinfarbstoffgehalt des eingesetzten Dispersionsfarbstoffs und nach dem Flottenverhältnis sowie nach dem Cellulose- bzw. Wollanteil des Mischgewebes.

Hier werden in der Regel, bezogen auf die eingesetzte Reinfarbstoffmenge, 1 bis 1000 %, vorzugsweise 10 bis 500 %, eingesetzt. Besonders bevorzugt verwendet man 10 bis 100 %.

Die Mengen, die in den Chemikalienklotzflotten eingesetzt werden, schwanken in den gleichen Grenzen wie bei den Färbeklotzflotten. Wenn die eingesetzten Dispersionsfarbstoffe durch die Reduktionsmittel bzw. das Alkali der Chemikalienklotzflotte leicht zerstört werden und die Spaltprodukte eine geringe Anschmutzungstendenz zeigen, können die eingesetzten Mengen an Verbindungen der allg. Formel I entsprechend reduziert werden.

Vorteile zeigt das erfindungsgemäße Verfahren insbesondere beim Färben von Polyester-Cellulose-Mischgewebe.

Bevorzugt wird der Celluloseanteil mit Schwefel- oder Küpenfarbstoffen, insbesondere jedoch mit Reaktivfarbstoffen, gefärbt. Ein besonders bevorzugtes Verfahren ist dabei dasjenige, bei dem der Polyesteranteil im sogenannten Thermosolverfahren und der Celluloseanteil mit Reaktivfarbstoff gefärbt wird, wobei man insbesondere den Polyesteranteil zuerst färbt.

Die Verbindungen der allgemeinen Formel I werden nach dem erfindungsgemäßen Verfahren in der Regel als besser handhabbare wäßrige Lösungen eingesetzt und werden in die Flotten und Bäder gut eingerührt.

Bevorzugt werden nach dem erfindungsgemäßen Verfahren die Verbindungen der allg. Formel I den Chemikalienklotzflotten und besonders bevorzugt den Farbstoffe enthaltenden Färbebädern bzw. Druckpasten zugesetzt. Bei letzteren wiederum bevorzugt ist der Einsatz in den Klotzflotten.

Ganz besonders bevorzugt werden die Verbindungen der allgemeinen Formel I aber bereits den Farbstoffpräparationen, aus denen die Färbebäder, Klotzflotten bzw. Druckpasten hergestellt werden, zugesetzt.

Die vorliegende Erfindung betrifft deshalb auch Farbstofformulierungen mit einem Farbstoffgehalt von 15 bis 40 Gew.% zur Herstellung von Färbebädern, Klotzflotten und Druckpasten, die beim Färben bzw. Bedrucken von Mischgeweben aus Polyester und natürlichen Fasermaterialien die Anschmutzung des Anteils an natürlichen Fasermaterialien durch Dispersionsfarbstoff verhindern, dadurch gekennzeichnet, daß sie eine oder mehrere Verbindungen der allgemeinen Formel I

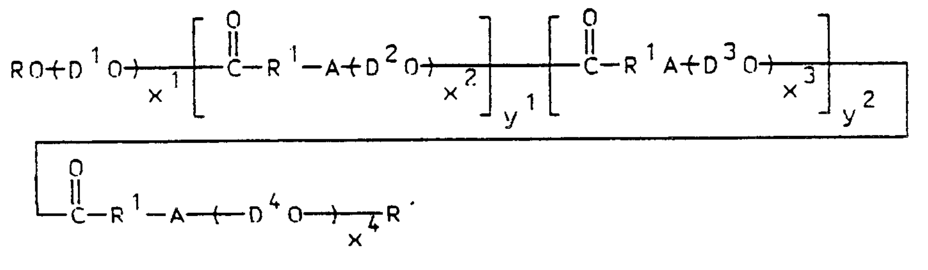

(I)

enthalten, worin

R und R' unabhängig voneinander Wasserstoff, lineares oder verzweigtes Alkyl mit 1 bis 18 Kohlenstoffatomen, das gegebenenfalls substituiert ist durch Chlor, Brom oder Alkoxy mit 1 bis 4 Kohlenstoffatomen; Cyclopentyl; Cyclohexyl; Allyl; Methallyl; Acryl; Methacryl; Crotyl; Phenyl, das mono- oder disubstituiert ist durch Chlor, Brom, Methyl, Alkoxy mit 1 bis 4 Kohlenstoffatomen,

$$-(D^5O)_{x^5}R''$$

worin $x^5$ für eine Zahl von 1 bis 10 steht; Benzyl oder COR'', wobei R'' eine der Bedeutungen von R haben kann, aber von diesem unabhängig ist, bedeuten,
$D^1$ bis $D^5$ lineare ($C_2$-$C_{10}$)- oder cyclische ($C_3$-$C_{10}$)-Alkylen-Einheiten, die unsubstituiert oder durch ($C_1$-$C_4$)-Alkyl, ($C_1$-$C_4$)-Alkoxy oder

$$-CH_2-(-OCH_2CH_2-)_p-OR,$$

worin p für eine Zahl von 0-10 steht, substituiert sind, oder

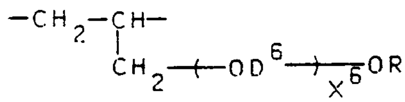

worin $D^6$ unabhängig von $D^1$ bis $D^5$ die gleichen Bedeutungen wie diese hat und $x^6$ eine Zahl von 1 bis 100 ist, bedeuten, wobei alle Gruppen $D^1$ bis $D^5$ innerhalb eines idealisiert dargestellten Moleküls der allgemeinen Formel I beliebig vertauscht sein können und somit einer statistischen Verteilung unterliegen,
$X^1$ bis $X^5$ unabhängig voneinander eine Zahl von 1 bis 100 26deuten.
A

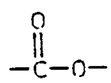 oder 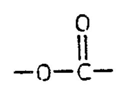

bedeutet.
$R^1$ 1.4-Phenylen, 1.2-Phenylen, 1.3-Phenylen, 1.4-Naphtylen, 1.8-Naphtylen, 2.2'-, 2.4'-, oder 4.4'-Biphenylen, lineares oder verzweigtes Alkylen mit 2 bis 18 Kohlenstoffatomen oder cyclisches Alkylen mit 4 bis 6 Kohlenstoffatomen, wobei alle Reste $R^1$ gegebenenfalls substituiert sein können durch wenigstens eine Gruppe $SO_3M$ oder COOM, worin M für Wasserstoff, ein Kation aus der Reihe der Alkalimetalle oder ein Kation aus der Reihe Ammoniak, primäres, sekundäres, tertiäres oder quartäres Amin steht; oder durch

$$-(-OD^1)_{x^1}-OR \; ;$$

$$-CH_2-(-OCH_2-CH_2)_p-OR \; ;$$

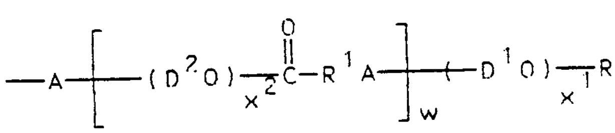

oder

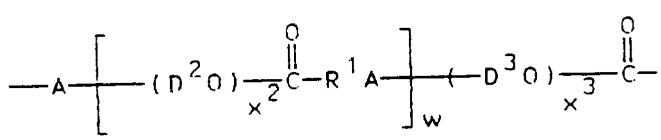

wobei der letzte Rest zwei Reste $R^1$ gleichzeitig substituiert, und w eine Zahl von 1 bis 5 ist, bedeutet, wobei die Reste $R^1$ einer statistischen Verteilung unterliegen und $y^1$ und $y^2$ im Rahmen der Bedingung, daß die Summe $y^1$ + $y^2$ 0 bis 20 ist, unabhängig voneinander eine Zahl von 0 bis 20 bedeuten.

Die erfindungsgemäßen Farbstoffpräparationen sind flüssige oder pulverförmige Dispersionsfarbstoffpräparationen oder aber Farbstoffpräparationen, die den Dispersionsfarbstoff und den Farbstoff zum Färben des Cellulose- bzw. Wollanteils gemeinsam enthalten. Letztere sind z.B. Kombinationen aus Dispersions- und Reaktiv-, Schwefel- bzw. Küpenfarbstoff. Sie enthalten die Verbindungen der allgemeinen Formel I in

Mengen von 1 bis 50 Gew.%, vorzugsweise 1 bis 30 Gew.%. Der Farbstoffgehalt beträgt 15 bis 40 Gew.%, vorzugsweise 20 bis 30 Gew.%.

Flüssige Farbtoffpräparationen sind bevorzugt.

Die erfindungsgemäßen Farbstoffpräparationen werden hergestellt, indem der Farbstoff bzw. die Farbstoffe in Gegenwart einer oder mehrerer Verbindungen der allgemeinen Formel I, eines oder mehrerer Dispergiermittel oder eines oder mehrerer Emulgatoren und gegebenenfalls in Gegenwart weiterer Hilfsmittel in geeigneten Mühlen gemeinsam gemahlen werden.

Geeignete Mühlen sind beispielsweise Kugel- oder Sandmühlen.

Der Mahlprozeß wird bei 0 bis 100°C, bevorzugt bei 20 bis 70°C, durchgeführt.

Soll eine pulverförmige Dispersion hergestellt werden, muß sich dem Mahlvorgang noch eine Sprühtrocknung anschließen. Das Sprühtrocknen limitiert i.a. die zusetzbare Menge der Verbindungen der allgemeinen Formel I.

Flüssige Präparationen können deshalb einen höheren Anteil enthalten als pulverförmige.

Bei flüssigen Präparationen können die Verbindungen der allgemeinen Formel I unter der Voraussetzung, daß man sie gut unterrührt, auch nach dem Mahlen zugesetzt werden. Geeignete Dispergiermittel sind z.B. anionische oder nichtionische Dispergiermittel, die auch gemeinsam eingesetzt werden können. Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren. Alkyl- oder Alkylarylsulfonate sowie Alkyl-aryl-polyglykol-ether-sulfate und insbesondere neutralisierte Säureester eines oxethylierten Novolacks. Nichtionische Dispergiermittel oder Emulgatoren sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäure-amiden, wie z.B. Anlagerungsprodukte von 5 bis 10 Ethylenoxid-Einheiten an $C_8$-$C_{10}$-Alkylphenole.

Die genannten Dispergiermittel sind in flüssigen Farbstoffpräparationen zu 15 bis 40 Gew.%, bevorzugt 20 bis 30 Gew.%, enthalten, in pulverförmigen Farbstoffpräparationen zu 20 bis 45 Gew.%.

Die erfindungsgemäßen Farbstoffpräparationen können auch noch weitere Hilfsmittel enthalten, z.B. solche, die als Oxidationsmittel wirken, wie z.B. Natrium-m-nitrobenzolsulfonat oder fungizide Mittel, wie z.B. Natrium-o-phenol-phenolat und Natrium-penta-chlorphenolat. Als Pulver formierte Farbstoffmischungen enthalten darüber hinaus noch andere Hilfsmittel wie z.B. Netz- oder Entstaubungsmittel. Die Farbstoffpräparationen enthalten die genannten Hilfsmittel in Mengen von 0 bis 5 Gew.%, bevorzugt 0 bis 2 Gew.%.

Die erfindungsgemäßen Farbstoffpräparationen können auch zum Färben von reinem Polyester eingesetzt werden. Das zu färbende Polyestersubstrat kann dabei z.B. Stückware (Web- oder Wirkware) oder Garn sein. Bevorzugt sind hierbei Präparationen, die Verbindungen der allgemeinen Formel I enthalten, in der R und R' ungleich Wasserstoff sind.

Zur Verdeutlichung des Erfindungsgedankens sind nachfolgend einige Beispiele aufgeführt.

Beispiel 1:

31,3 g eines wasserhaltigen Filterkuchens des Farbstoffs C.I. Disperse Blue 165, die 25 g Reinfarbstoff enthalten, werden mit 22 g eines Ligninsulfonats, 31,7 g Wasser und 6 g einer Verbindung der allgemeinen Formel I, in der R und R' Wasserstoff, $D^1$, $D^2$ und $D^4$ Ethenyl, $y^1$ 1, $y^2$ 0, $x^1$ 21, $x^4$ und $x^2$ 1, sowie $R^1$ 4-$C_6H_4$ ist, in Form von 15 g einer 40%igen wässrigen Losung in einer Sandmühle 3 Stunden gemahlen, so daß ca. 80 % der Farbstoffteilchen eine Korngröße <1 µm aufweisen. 30 g des vom Sand abgetrennten so erhaltenen Farbstoffs werden zusammen mit 15 g eines handelsüblichen Antimigrationsmittels und 2 g Mononatriumphosphat so in eine Klotzflotte eingerührt, daß deren Endvolumen 1 Liter beträgt. Mit dieser Klotzflotte wird ein 65:35 Polyester/Baumwoll-Mischgewebe bei 25°C imprägniert, auf ca. 65% Flüssigkeitsaufnahme abgequetscht, im Infrarot-Trockner 30 sec. vorgetrocknet, 60 sec. bei 110°C getrocknet und der Dispersionsfarbstoff bei 210°C während 60 sec. in der Polyesterfaser fixiert. Anschließend wird das vorgefärbte Mischgewebe den Färbebedingungen einer nachfolgenden Reaktivfärbung, allerdings ohne Farbstoff, unterworfen. Dazu wird das Mischgewebe bei 25°C mit einem Chemikalienbad, das 240 g/Liter Kochsalz, 15 g/Liter Soda, 11,3 g/Liter einer 50%igen Natronlauge und 4 g/Liter eines Oxidationsmittels auf Basis Benzolsulfonsäure-Derivat geklotzt, auf 90 bis 100 % Flüssigkeitsaufnahme abgequetscht und 45 sec. bei 102 bis 105°C gedämpft. Zuletzt wird das Mischgewebe in heißem Wasser gespült und getrocknet.

Eine Färbung, die zum Vergleich ohne Zusatz einer Verbindung der allgemeinen Formel I durchgeführt wurde, fällt deutlich trüber aus. Wird anschließend der Baumwollanteil mit einer Mischung aus den Handelsformen von C.I. Reactive Blue 19 und 220 auf denselben Farbton gefärbt, ist auch die gesamte Färbung stumpfer, wenn kein Hilfsmittel der allgemeinen Formel I eingesetzt wurde.

Der Effekt kann verdeutlicht werden dadurch, daß man den Baumwollanteil des Mischgewebes nach der Färbung mit Schwefelsäure herauslöst. Der verbleibende Polyesteranteil ist mit dem Hilfsmittelzusatz deutlich brillanter gefärbt als ohne diesen.

Wird reine Baumwolle, z.B. Baumwoll-Popeline, wie oben beschrieben mit der Klotzflotte imprägniert, fixiert und nachbehandelt, so ist, wenn der eingesetzte Farbstoff das Hilfsmittel nicht enthält, das Substrat grau angefärbt, bei Hilfsmittelzusatz dagegen fast weiß.

Beispiel 1a

30 g einer handelsüblichen, ca. 25 % Reinfarbstoff enthaltenden Flüssigeinstellung von C.I. Disperse Blue 165 und 10 g einer 40 %igen wäßrigen Lösung der Verbindung der allgemeinen Formel I, in der R und R' Wasserstoff, $D^1$, $D^2$ und $D^4$ Ethenyl, $y^1$ 1, $y^2$ 0. $x^1$ 21, $x^4$ und $x^2$ 1, sowie $R^1$ 4-$C_6H_4$ ist, werden zusammen mit 15 g eines handelsüblichen Antimigrationsmittels und 2 g Mononatriumphosphat so in eine Klotzflotte eingerührt, daß deren Endvolumen 1 Liter beträgt. Mit dieser Klotzflotte wird, wie in Beispiel 1 angegeben, weiter verfahren. Es werden auch hier die in Beispiel 1 beschriebenen hervorragenden Ergebnisse erhalten.

Wird im Beispiel 1 oder im Beispiel 1a die Verbindung der allgemeinen Formel I ersetzt durch die weiteren in Tabelle 1 angeführten Verbindungen der allgemeinen Formel I, so erhält man im Vergleich zu den Färbungen ohne Hilfsmittel gute Ergebnisse wie in Beispiel 1 oder in Beispiel 1a.

Tabelle 1

| Beisp. | R | R' | $D^1$ | $D^2$ | $D^3$ | $D^4$ | $y^1$ | $y^2$ | $x^1$ | $x^4$ | $x^2$ | $x^3$ | $R^1$ |
|---|---|---|---|---|---|---|---|---|---|---|---|---|---|
| 2 | H | H | $-CH_2-CH_2-$ | $-CH_2-CH_2-$ | - | $-CH_2-CH_2-$ | 1 | 0 | 33 | 1 | 1 | - | TPA |
| 3 | H | H | $-CH_2-CH_2-$ | $-CH_2-CH_2-$ | - | $-CH_2-CH_2-$ | 1 | 0 | 44 | 1 | 1 | - | TPA |
| 4 | H | H | $-CH_2-CH_2-$ | $-CH_2-CH_2-$ | - | $-CH_2-CH_2-$ | 1 | 0 | 67 | 1 | 1 | - | TPA |
| 5 | H | H | $-CH_2-CH_2-$ | $-CH_2-CH_2-$ | - | $-CH_2-CH_2-$ | 1,5 | 0 | 44 | 1 | 1 | - | TPA |
| 6 | H | H | $-CH_2-CH_2-$ | $-CH_2-CH_2-$ | - | $-CH_2-CH_2-$ | 2 | 0 | 67 | 1 | 1 | - | TPA |
| 7 | H | H | $-CH_2-CH_2-$ | $-CH_2-\overset{CH_3}{\overset{\vert}{CH}}-$ | - | $-CH_2-\overset{CH_3}{\overset{\vert}{CH}}-$ | 1 | 0 | 21 | 1 | 1 | - | TPA |
| 8 | H | H | $-CH_2-CH_2-$ | $-CH_2-\overset{CH_3}{\overset{\vert}{CH}}-$ | - | $-CH_2-\overset{CH_3}{\overset{\vert}{CH}}-$ | 1 | 0 | 33 | 1 | 1 | - | TPA |
| 9 | H | H | $-CH_2-CH_2-$ | $-CH_2-\overset{CH_3}{\overset{\vert}{CH}}-$ | - | $-CH_2-\overset{CH_3}{\overset{\vert}{CH}}-$ | 1 | 0 | 44 | 1 | 1 | - | TPA |

| Beisp. | R | R' | $D^1$ | $D^2$ | $D^3$ | $D^4$ | $y^1$ | $y^2$ | $x^1$ | $x^4$ | $x^2$ | $x^3$ | $R^1$ |
|---|---|---|---|---|---|---|---|---|---|---|---|---|---|
| 10 | H | H | $-CH_2-CH_2-$ | $CH_3$<br>\|<br>$-CH_2-CH-$ | - | $CH_3$<br>\|<br>$-CH_2-CH-$ | 1 | 0 | 67 | 1 | 1 | - | TPA |
| 11 | H | H | $-CH_2-CH_2-$ | $CH_3$<br>\|<br>$-CH_2-CH-$ | - | $CH_3$<br>\|<br>$-CH_2-CH-$ | 2 | 0 | 33 | 1 | 1 | - | TPA |
| 12 | H | H | $-CH_2-CH_2-$ | $CH_3$<br>\|<br>$-CH_2-CH-$ | - | $CH_3$<br>\|<br>$-CH_2-CH-$ | 2 | 0 | 44 | 1 | 1 | - | TPA |
| 13 | H | H | $-CH_2-CH_2-$ | $-(CH_2)_4-$ | - | $-(CH_2)_4-$ | 1 | 0 | 44 | 1 | 1 | - | TPA |
| 14 | H | H | $-CH_2-CH_2-$ | $-(CH_2)_4-$ | - | $-(CH_2)_4-$ | 1 | 0 | 67 | 1 | 1 | - | TPA |
| 15 | H | H | $-CH_2-CH_2-$ | $-CH_2-CH_2-$ | - | $-(CH_2)_4-$ | 1 | 0 | 33 | 1 | 1 | - | TPA |
| 16 | H | H | $-CH_2-CH_2-$ | $-CH_2-CH_2-$ | - | $-CH_2-CH_2-$ | 2 | 0 | 33 | 1 | 1 | - | 2,55 TPA<br>0,45 SIA |
| 17 | H | H | $-CH_2-CH_2-$ | $CH_3$<br>\|<br>$-CH_2-CH-$ | - | $CH_3$<br>\|<br>$-CH_2-CH-$ | 2 | 0 | 33 | 1 | 1 | - | 2,55 IPA<br>0,45 SIA |

| Beisp. | R | R' | $D^1$ | $D^2$ | $D^3$ | $D^4$ | $y^1$ | $y^2$ | $x^1$ | $x^4$ | $x^2$ | $x^3$ | $R^1$ |
|---|---|---|---|---|---|---|---|---|---|---|---|---|---|
| 18 | $CH_3$ | H | $-CH_2-CH_2-$ | $CH_3$<br>$-CH_2-CH-$ | - | $CH_3$<br>$-CH_2-CH-$ | 1,25 | 0 | 16 | 1 | 1 | - | TPA |
| 19 | $CH_3$ | H | $-CH_2-CH_2-$ | $CH_3$<br>$-CH_2-CH-$ | $-CH_2-CH_2-$ | $CH_3$<br>$-CH_2-CH-$ | 3,6 | 0,4 | 30 | 1 | 1 | 31 | TPA |
| 20 | $CH_3$ | $CH_3$ | $-CH_2-CH_2-$ | $CH_3$<br>$-CH_2-CH-$ | - | $-CH_2-CH_2-$ | 1,25 | 0 | 16 | 16 | 1 | - | TPA |
| 21 | $CH_3$ | $CH_3$ | $-CH_2-CH_2-$ | $CH_3$<br>$-CH_2-CH-$ | - | $-CH_2-CH_2-$ | 1,25 | 0 | 30 | 30 | 1 | - | TPA |
| 22 | $CH_3$ | $CH_3$ | $-CH_2-CH_2-$ | $CH_3$<br>$-CH_2-CH-$ | - | $-CH_2-CH_2-$ | 1,25 | 0 | 44 | 44 | 1 | - | TPA |
| 23 | $CH_3$ | $CH_3$ | $-CH_2-CH_2-$ | $CH_3$<br>$-CH_2-CH-$ | - | $-CH_2-CH_2-$ | 4 | 0 | 30 | 30 | 1 | - | TPA |
| 24 | $CH_3$ | $CH_3$ | $-CH_2-CH_2-$ | $CH_3$<br>$-CH_2-CH-$ | - | $-CH_2-CH_2-$ | 4 | 0 | 44 | 44 | 1 | - | TPA |

| Beisp. | R | R' | $D^1$ | $D^2$ | $D^3$ | $D^4$ | $y^1$ | $y^2$ | $x^1$ | $x^4$ | $x^2$ | $x^3$ | $R^1$ |
|---|---|---|---|---|---|---|---|---|---|---|---|---|---|
| 25 | $CH_3$ | $CH_3$ | $-CH_2-CH_2-$ | $CH_3$<br>\|<br>$-CH_2-CH-$ | $-CH_2-CH_2-$ | $-CH_2-CH_2-$ | 3,6 | 0,4 | 30 | 30 | 1 | 31 | TPA |
| 26 | $CH_3$ | $CH_3$ | $-CH_2-CH_2-$ | $CH_3$<br>\|<br>$-CH_2-CH-$ | $-CH_2-CH_2-$ | $-CH_2-CH_2-$ | 3,6 | 0,4 | 44 | 44 | 1 | 31 | TPA |
| 27 | $CH_3$ | $CH_3$ | $-CH_2-CH_2-$ | $-CH_2-CH_2-$ | $-CH_2-CH_2-$ | $-CH_2-CH_2-$ | 3,6 | 0,4 | 30 | 30 | 1 | 31 | 4 IPA<br>1 SIA |
| 28 | H | H | $-CH_2-CH_2-$ | $-CH_2-CH_2-$ | - | $-CH_2-CH_2-$ | $10 \leq z^1$<br>$\leq 100$ | 0 | 2 | 2 | 2 | - | 0,825xzIPA<br>0,175xzSIA |
| 29 | H | H | $-CH_2-CH_2-$ | $-CH_2-CH_2-$ | $-CH_2-CH_2-$ | $-CH_2-CH_2-$ | $9 \leq z^1$<br>$\leq 90$ | $1 \leq z^2$<br>$\leq 100$ | 2 | 2 | 2 | 13 | 0,5xzIPA<br>0,4xzTPA<br>0,1xzSIA |

In der Tabelle 1 bedeuten die Abkürzungen:

TPA: 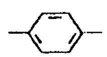

IPA: 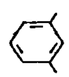

SIA: 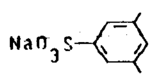

$z^1 + z^2 = z$

Beispiel 30

Werden anstelle von 25 g (Reinfarbstoff) des Farbstoffs C.I. Disperse Blue 165 16 g (Reinfarbstoff) des Farbstoffs C.I. Disperse Red 184 so wie im Beispiel 1 angegeben gefinished und gefärbt, so erhält man

auch hier nach dem Auslösen der Baumwolle eine klarere rote Polyesterfärbung bzw. beim Versuch, reine Baumwolle anzufärben, eine deutlich geringere Anfärbung als ohne Verwendung des Hilfsmittels.

Beispiel 30a

Werden anstelle von 30 g einer flüssigen Handelsform von C.I. Disperse Blue 165 30 g einer flüssigen, ca 16 % Reinfarbstoff enthaltenden Handelsform von Disperse Red 184 so wie im Beispiel 1 angegeben gefärbt, so erhält man nach dem Auslösen der Baumwolle eine klarere rote Polyesterfärbung bzw. beim Versuch, reine Baumwolle anzufärben, eine deutlich geringere Anfärbung als ohne Verwendung des Hilfsmittels.

Beispiel 31

1 g des gemäß Beispiel 1 hergestellten Farbstoffs C.I. Disperse Blue 165 und 0,2 g des gemäß Beispiel 30 hergestellten Farbstoffs C.I. Disperse Red 184 werden in 2000 g Wasser dispergiert. Die Dispersion wird mit 4 g Ammoniumsulfat, 2 g eines handelsüblichen Dispergiermittels auf Basis eines Kondensationsproduktes aus Naphthalinsulfonsäurenatriumsalz und Formaldehyd und 2 g eines Kondensationsproduktes aus m-Kresol, Formaldehyd und Natriumsulfit versetzt und mit Essigäure auf einen pH-Wert von 5,5 gestellt. In die so erhaltene Färbeflotte bringt man 100 g eines 65:35 Polyester/Baumwoll-Mischgewbes und färbt 45 min. bei 130°C. Nach dem Spülen, Seifen und erneuten Spülen wird der Baumwollanteil des Mischgewebes mit der Handelsform von C.I. Reactive Blue 19 nachgefärbt. Die Färbung ist wiederum deutlich brillanter als ohne die Verwendung des Hilfsmittels der allgemeinen Formel I.

Beispiel 31a

1 g der oben genannten flüssigen Handelsform von C.I. Disperse Blue 165 und 0,2 g der obengenannten flüssigen Handelsform von C.I. Disperse Red 184 werden zusammen mit 1 g der in Beispiel 1 eingesetzten Verbindung der allgemeinen Formel I in 2000 g Wasser dispergiert. Die Dispersion wird mit 4 g Ammoniumsulfat, 2 g eines handelsüblichen Dispergiermittels auf Basis eines Kondensationsproduktes aus Naphthalinsulfonsäurenatriumsalz und Formaldehyd und 2 g eines Kondensationsproduktes aus m-Kresol, Formaldehyd und Natriumsulfit versetzt und mit Essigäure auf einen pH-Wert von 5,5 gestellt. In die so erhaltene Färbeflotte bringt man 100 g eines 65:35 Polyester/Baumwoll-Mischgewebes und färbt 45 min. bei 130°C. Nach dem Spülen, Seifen und erneuten Spülen wird der Baumwollanteil des Mischgewebes mit der Handelsform von C.I. Reactive Blue 19 nachgefärbt. Die Färbung ist wiederum deutlich brillanter als ohne die Verwendung des Hilfsmittels der allgemeinen Formel I.

Beispiel 32

Aus 400 g einer 10%igen Alginatverdickung, 5 g eines Wasserenthärtungsmittels auf Basis Polyphoshat, 5 g eines Oxidationsmittels auf Basis Benzolsulfonsäure-Derivat, 200 g Harnstoff, 20 g einer 10%igen Lösung eines Emulgators auf Basis Fettsäureglykolester, 240 g Wasser, 100 g Benzin und 30 g Natriumbicarbonat wird eine Stammverdickung hergestellt. In 700 g dieser Stammverdickung werden 15 g des gemäß Beispiel 1 hergestellten Farbstoffs und 50 g der Handelsform von C.I. Reactive Blue 53 und 235 g Wasser eingerührt und diese Stammfarbe mittels einer Rouleaux-Druck-Maschine mustermäßig auf ein Polyester/Baumwoll-Mischgewebe aufgebracht. Die Farbstoffe werden dann bei 175°C durch überhitzten Dampf 5 min. fixiert, mit Wasser abgespritzt, geseift und gespült.

Der Druck ist deutlich brillanter als ohne die Verwendung des Hilfsmittels der allgemeinen Formel I.

Beispiel 32a

Aus 400 g einer 10%igen Alginatverdickung, 5 g eines Wasserenthärtungsmittels auf Basis Polyphoshat, 5 g eines Oxidationsmittels auf Basis Benzolsulfonsäure-Derivat, 200 g Harnstoff, 20 g einer 10%igen Lösung eines Emulgators auf Basis Fettsäureglykolester, 240 g Wasser, 100 g Benzin und 30 g Natriumbicarbonat wird eine Stammverdickung hergestellt. In 700 g dieser Stammverdickung werden 2,25 g einer 40%igen Lösung der Verbindung der allgemeinen Formel I, 15 g der obengenannten flüssigen Handelsform von C.I. Disperse Blue 165 und 50 g der Handelsform von C.I. Reactive Blue 53 und 235 g Wasser eingerührt und diese Stammfarbe mittels einer Rouleaux-Druck-Maschine mustermäßig auf ein Polyester/Baumwoll-Mischgewebe aufgebracht Die Farbstoffe werden dann bei 175°C durch überhitzten Dampf 5

min. fixiert, mit Wasser abgespritzt, geseift und gespült.

Der Druck ist deutlich brillanter als ohne die Verwendung des Hilfsmittels der allgemeinen Formel I.

Beispiel 33

88 g eines wasserhaltigen Filterkuchens des Farbstoffs C.I. Disperse Red 358, die 35 g Reinfarbstoff enthalten, werden mit 18 g eines Ligninsulfonats und 6 g der in Beispiel 2 verwendeten Verbindung der allgemeinen Formel I in Form von 5 g einer 40%igen wäßrigen Lösung und 21 g Wasser wie im Beispiel 1 beschrieben zu einer Flüssigeinstellung verarbeitet. 1 g dieses Farbstoffs wird in 2000 g Wasser dispergiert. Die Dispersion wird mit 2 g Ammoniumsulfat und 4 g eines Carriers auf Basis Methylnaphthalin versetzt und mit Essigsäure auf einen pH-Wert von 5 eingestellt. In die so erhaltene Färbeflotte bringt man 100 g eines 50:50 Polyester/Wolle-Mischgewbes und färbt 1 Stunde bei 106°C. Nach anschließendem Spülen, Seifen, erneutem Spülen und Trocknen erhält man eine rote Färbung, die deutlich klarer ist als diejenige, die ohne Zusatz des Hilfsmittels erhalten wird.

Beispiel 33a

0,8 g einer handelsüblichen Pulvereinstellung von C.I. Disperse Red 358 werden zusammen mit 0,8 g einer 40 %igen wäßrigen Lösung der zu Beispiel 1 verwendeten Verbindung der allgemeinen Formel I in 2000 g Wasser dispergiert. Die Dispersion wird mit 2 g Ammoniumsulfat und 4 g eines Carriers auf Basis Methylnaphthalin versetzt und mit Essigsäure auf einen pH-Wert von 5 eingestellt. In die so erhaltene Färbeflotte bringt man 100 g eines 50:50 Polyester/Wolle-Mischgewbes und färbt 1 Stunde bei 106°C. Nach anschließendem Spülen, Seifen, erneutem Spülen und Trocknen erhält man eine rote Färbung, die deutlich klarer ist als diejenige, die ohne Zusatz des Hilfsmittels erhalten wird.

## Patentansprüche

1. Verwendung von Verbindungen der allgemeinen Formel I

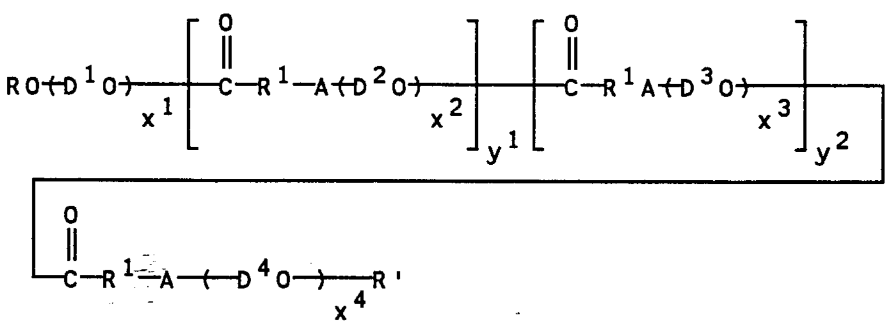

(I)

worin

R und R' unabhängig voneinander Wasserstoff, lineares oder verzweigtes Alkyl mit 1 bis 18 Kohlenstoffatomen, das gegebenenfalls substituiert ist durch Chlor, Brom oder Alkoxy mit 1 bis 4 Kohlenstoffatomen; Cyclopentyl; Cyclohexyl; Allyl; Methallyl; Acryl; Methacryl; Crotyl; Phenyl, das mono- oder disubstituiert ist durch Chlor, Brom, Methyl, Alkoxy mit 1 bis 4 Kohlenstoffatomen,

$$-(D^5O)_{x^5}-R''$$

worin $x^5$ für eine Zahl von 1 bis 10 steht; Benzyl oder COR", wobei R" eine der Bedeutungen von R haben kann, aber von diesem unabhängig ist, bedeuten,

$D^1$ bis $D^5$ lineare ($C_2$-$C_{10}$)- oder cyclische ($C_3$-$C_{10}$)-Alkylen-Einheiten, die unsubstituiert oder durch ($C_1$-$C_4$)-Alkyl, ($C_1$-$C_4$)-Alkoxy oder

$$-CH_2-(OCH_2CH_2)_p-OR,$$

worin p für eine Zahl von 0-10 steht, substituiert sind, oder

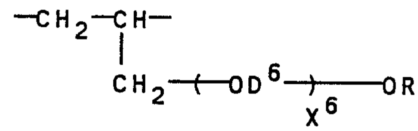

worin $D^6$ unabhängig von $D^1$ bis $D^5$ die gleichen Bedeutungen wie diese hat und $x^6$ eine Zahl von 1 bis 100 ist, bedeuten, wobei alle Gruppen $D^1$ bis $D^5$ innerhalb eines idealisiert dargestellten Moleküls der allgemeinen Formel I beliebig vertauscht sein können und somit einer statistischen Verteilung unterliegen,

$x^1$ bis $x^5$ unabhängig voneinander eine Zahl von 1 bis 100 bedeuten,

A

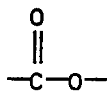 oder 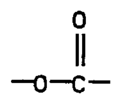

bedeutet,

$R^1$ 1.4-Phenylen, 1.2-Phenylen, 1.3-Phenylen, 1.4-Naphtylen, 1.8-Naphtylen, 2.2'-, 2.4'-, oder 4.4'-Biphenylen, lineares oder verzweigtes Alkylen mit 2 bis 18 Kohlenstoffatomen oder cyclisches Alkylen mit 4 bis 6 Kohlenstoffatomen, wobei alle Reste $R^1$ gegebenenfalls substituiert sein können durch wenigstens eine Gruppe $SO_3M$ oder COOM, worin M für Wasserstoff, ein Kation aus der Reihe der Alkalimetalle oder ein Kation aus der Reihe Ammoniak, primäres, sekundäres, tertiäres oder quartäres Amin steht; oder durch

$$-(OD^1)_{x^1}-OR\ ;$$

$$-CH_2-(OCH_2-CH_2)_p-OR\ ;$$

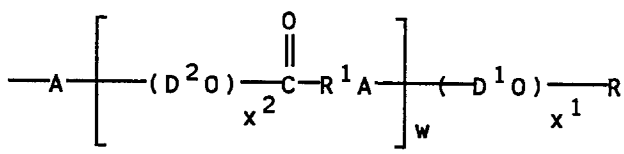 oder

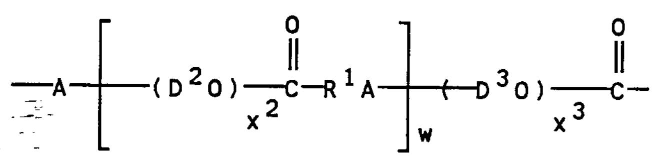

wobei der letzte Rest zwei Reste $R^1$ gleichzeitig substituiert, und w eine Zahl von 1 bis 5 ist, bedeutet, wobei die Reste $R^1$ einer statistischen Verteilung unterliegen und

$y^1$ und $y^2$ im Rahmen der Bedingung, daß die Summe $y^1 + y^2$ 0 bis 20 ist, unabhängig voneinander eine Zahl von 0 bis 20 bedeuten,

als Färbereihilfsmittel beim Färben und Bedrucken von Mischgeweben aus Polyester und natürlichen Fasermaterialien zur Verhinderung der Anschmutzung des Anteils an natürlichen Fasermaterialien durch Dispersionsfarbstoff.

2. Verwendung nach Anspruch 1, dadurch gekennzeichnet, daß R, R' und R'' Wasserstoff oder Methyl bedeuten.

3. Verwendung nach Anspruch 1 und/oder 2, dadurch gekennzeichnet, daß $D^1$ bis $D^6$ Ethylen, 1,2-Propylen oder 1,4-Butylen bedeuten.

4. Verwendung nach einem oder mehreren der Ansprüche 1 bis 3, dadurch gekennzeichnet, daß $x^1$ und $x^3$ bis $x^6$ 1 bis 80 und $x^2$ 1 bis 4 bedeuten.

5. Verwendung nach einem oder mehreren der Ansprüche 1 bis 5, dadurch gekennzeichnet, daß $R^1$ 1,4-Phenylen, 1,3-Phenylen oder 1,2-Phenylen bedeutet.

6. Verwendung nach einem oder mehreren der Ansprüche 1 bis 6, dadurch gekennzeichnet, daß $y^1$ und $y^2$ 1 bis 10 bedeuten.

7. Farbstofformulierung mit einem Farbstoffgehalt von 15 bis 40 Gew.% zur Herstellung von Färbebädern, Klotzflotten und Druckpasten, die beim Färben bzw. Bedrucken von Mischgeweben aus Polyester und natürlichen Fasermaterialien die Anschmutzung des Anteils an natürlichen Fasermaterialien durch Dispersionsfarbstoff verhindern, dadurch gekennzeichnet, daß sie eine oder mehrere Verbindungen der allgemeinen Formel I

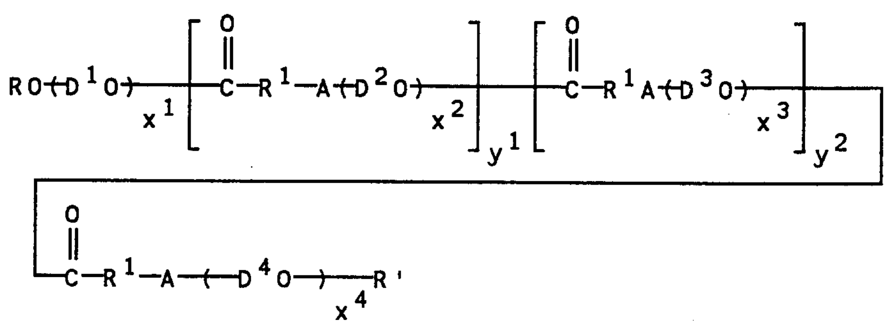

(I)

enthält, worin
R und R' unabhängig voneinander Wasserstoff, lineares oder verzweigtes Alkyl mit 1 bis 18 Kohlenstoffatomen, das gegebenenfalls substituiert ist durch Chlor, Brom oder Alkoxy mit 1 bis 4 Kohlenstoffatomen; Cyclopentyl; Cyclohexyl; Allyl; Methallyl; Acryl; Methacryl; Crotyl; Phenyl, das mono- oder disubstituiert ist durch Chlor, Brom, Methyl, Alkoxy mit 1 bis 4 Kohlenstoffatomen,

$$-(D^5O)_{x^5}-R''$$

worin $x^5$ für eine Zahl von 1 bis 10 steht; Benzyl oder COR'', wobei R'' eine der Bedeutungen von R haben kann, aber von diesem unabhängig ist, bedeuten,
$D^1$ bis $D^5$ lineare ($C_2$-$C_{10}$)- oder cyclische ($C_3$-$C_{10}$)-Alkylen-Einheiten, die unsubstituiert oder durch ($C_1$-$C_4$)-Alkyl, ($C_1$-$C_4$)-Alkoxy oder

$$-CH_2-(OCH_2CH_2)_p-OR,$$

worin p für eine Zahl von 0-10 steht, substituiert sind, oder

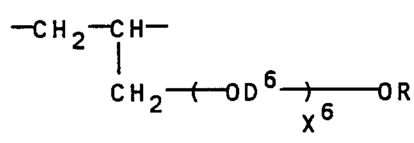

worin $D^6$ unabhängig von $D^1$ bis $D^5$ die gleichen Bedeutungen wie diese hat und $x^6$ eine Zahl von 1 bis 100 ist, bedeuten, wobei alle Gruppen $D^1$ bis $D^5$ innerhalb eines idealisiert dargestellten Moleküls der allgemeinen Formel I beliebig vertauscht sein können und somit einer statistischen Verteilung unterliegen,
$x^1$ bis $x^5$ unabhängig voneinander eine Zahl von 1 bis 100 bedeuten,
A

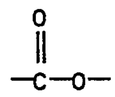 oder 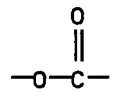

bedeutet,
$R^1$ 1.4-Phenylen, 1.2-Phenylen, 1.3-Phenylen, 1.4-Naphtylen, 1.8-Naphtylen, 2.2'-, 2.4'-, oder 4.4'-Biphenylen, lineares oder verzweigtes Alkylen mit 2 bis 18 Kohlenstoffatomen oder cyclisches Alkylen mit 4 bis 6 Kohlenstoffatomen, wobei alle Reste $R^1$ gegebenenfalls substituiert sein können durch wenigstens eine Gruppe $SO_3M$ oder COOM, worin M für Wasserstoff, ein Kation aus der Reihe der Alkalimetalle oder ein Kation aus der Reihe Ammoniak, primäres, sekundäres, tertiäres oder quartäres Amin steht; oder durch

$$-(OD^1)_{x^1}-OR \ ;$$

$$-CH_2-(OCH_2-CH_2)_p-OR \ ;$$

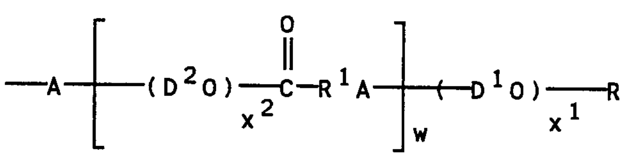 oder

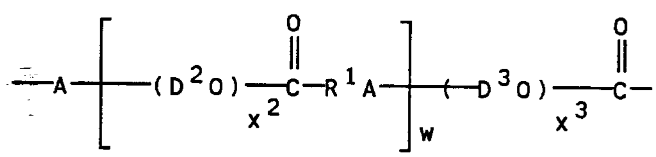

wobei der letzte Rest zwei Reste $R^1$ gleichzeitig substituiert, und w eine Zahl von 1 bis 5 ist, bedeutet, wobei die Reste $R^1$ einer statistischen Verteilung unterliegen und
$y^1$ und $y^2$ im Rahmen der Bedingung, daß die Summe $y^1 + y^2$ 0 bis 20 ist, unabhängig voneinander eine Zahl von 0 bis 20 bedeuten.

## Claims

**1.** Use of compounds of the general formula

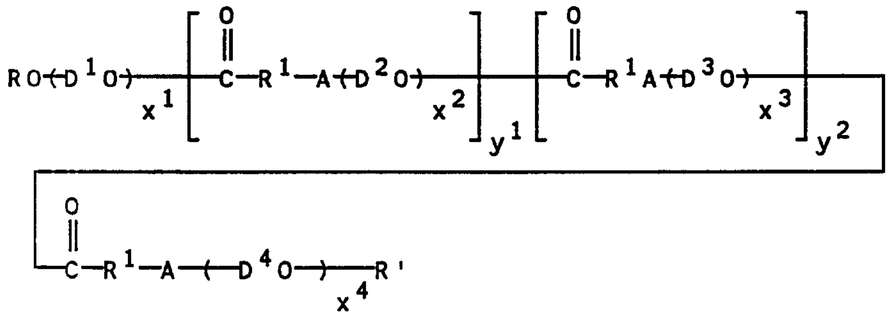

(I)

where
R and R' are independently of each other hydrogen, linear or branched alkyl of 1 to 18 carbon atoms which may be substituted by chlorine, bromine or alkoxy of 1 to 4 carbon atoms, cyclopentyl, cyclohexyl, allyl, methallyl, acryl, methacryl, crotyl, phenyl which is monosubstituted or disubstituted by chlorine, bromine, methyl, alkoxy of 1 to 4 carbon atoms,

$$-(D^5O)_{x^5}-R''$$

where $X^5$ is from 1 to 10, benzyl or COR", where R" may have one of the meanings of R but is independent therefrom, $D^1$ to $D^5$ are each linear $(C_2\text{-}C_{10})$- or cyclic $(C_3\text{-}C_{10})$-alkylene units which are unsubstituted or substituted by $(C_1\text{-}C_4)$-alkyl, $(C_1\text{-}C_4)$-alkoxy or

$$-CH_2-(OCH_2CH_2)_p-OR,$$

where p is from 0 to 10, or

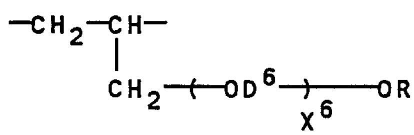

where $D^6$ has independently of $D^1$ to $D^5$ the same meanings as they have and $x^6$ is from 1 to 100, all the groups $D^1$ to $D^5$ within an idealized molecule of the general formula I being freely interchangeable and thus being subject to a random distribution, $X^1$ to $X^5$ are independently of each other from 1 to 100,
A is

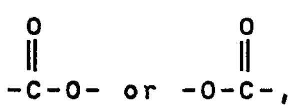

$R^1$ is 1,4-phenylene, 1,2-phenylene, 1,3-phenylene, 1,4-napthylene, 1,8-naphthylene, 2,2'-, 2,4'- or 4,4-biphenylene, linear or branched alkylene of 2 to 18 carbon atoms or cyclic alkylene of 4 to 6 carbon atoms, each of which $R^1$ radicals may be substituted by at least one group $SO_3M$ or COOM, where M is hydrogen, a cation from the series of the alkali metals or a cation from the group consisting of ammonia, and primary, secondary, tertiary and quaternary amines, or by

$-(OD^1)_{x^1}-OR$ ;

$-CH_2-(OCH_2-CH_2)_p-OR$;

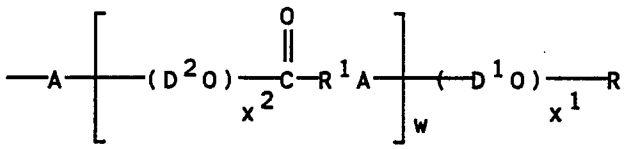

or

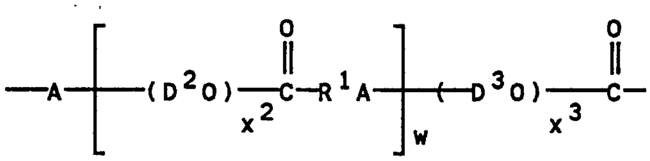

where the last radical is simultaneously substituted by two radicals $R^1$, and w is from 1 to 5, the radicals $R^1$ being subject to a random distribution, and
$y^1$ and $y^2$ being independently of each other from 0 to 20 subject to the condition that the sum $y^1 + y^2$ is from 0 to 20 as dyeing auxiliary in dyeing and printing blend fabrics of polyester and natural fibre materials for preventing the soiling of the portion of natural fibre materials by disperse dye.

2. Use according to Claim 1, characterized in that R, R' and R" are each hydrogen or methyl.

3. Use acoording to Claim 1 and/or 2, characterized in that $D^1$ to $D^6$ are each ethylene, 1,2-propylene or 1,4-butylene.

4. Use according to one or more of Claims 1 to 3, characterized in that $x^1$ and $x^3$ to $x^6$ are each from 1 to 80 and $x^2$ is from 1 to 4.

5. Use according to one or more of Claims 1 to 4, characterized in that $R^1$ is 1,4-phenylene, 1,3-phenylene or 1,2-phenylene.

6. Use according to one or more of Claims 1 to 5, characterized in that $y^1$ and $y^2$ are each from 1 to 10.

7. Dye preparation having a dye content of 15 to 40 percent by weight for preparing dyebaths, padding liquors and printing pastes which in dyeing or printing blend fabrics of polyester and natural fibre materials prevent the soiling of the portion of natural fibre material by disperse dye, characterized in that it contains one or more compounds of the general formula I

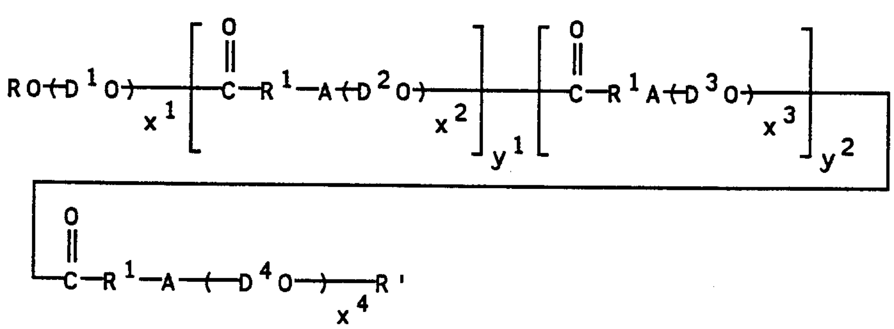

(I)

where
R and R' are independently of each other hydrogen, linear or branched alkyl of 1 to 18 carbon atoms which may be substituted by chlorine, bromine or alkoxy of 1 to 4 carbon atoms, cyclopentyl,

cyclohexyl, allyl, methallyl, acryl, methacryl, crotyl, phenyl which is monosubstituted or disubstituted by chlorine, bromine, methyl, alkoxy of 1 to 4 carbon atoms,

$$-(D^5O)_{x^5}R''$$

where $X^5$ is from 1 to 10, benzyl or COR", where R" may have one of the meanings of R but is independent therefrom, $D^1$ to $D^5$ are each linear $(C_2\text{-}C_{10})$- or cyclic $(C_3\text{-}C_{10})$-alkylene units which are unsubstituted or substituted by $(C_1\text{-}C_4)$-alkyl, $(C_1\text{-}C_4)$-alkoxy or

$$-CH_2-(OCH_2CH_2)_p-OR,$$

where p is from 0 to 10, or

$$-CH_2-\underset{\displaystyle CH_2-(OD^6)_{x^6}-OR}{\underset{|}{CH}}-$$

where $D^6$ has independently of $D^1$ to $D^5$ the same meanings as they have and $x^6$ is from 1 to 100, all the groups $D^1$ to $D^5$ within an idealized molecule of the general formula I being freely interchangeable and thus being subject to a random distribution, $X^1$ to $X^5$ are independently of each other from 1 to 100,

A is

$$-\overset{O}{\overset{\|}{C}}-O-\quad\text{or}\quad-O-\overset{O}{\overset{\|}{C}}-,$$

$R^1$ is 1,4-phenylene, 1,2-phenylene, 1,3-phenylene, 1,4-napthylene, 1,8-naphthylene, 2,2'-, 2,4'- or 4,4-biphenylene, linear or branched alkylene of 2 to 18 carbon atoms or cyclic alkylene of 4 to 6 carbon atoms, each of which $R^1$ radicals may be substituted by at least one group $SO_3M$ or COOM, where M is hydrogen, a cation from the series of the alkali metals or a cation from the group consisting of ammonia, and primary, secondary, tertiary and quaternary amines, or by

$$-(OD^1)_{x^1}-OR\ ;$$

$$-CH_2-(OCH_2-CH_2)_p-OR;$$

$$-A-\left[(D^2O)_{x^2}-\overset{O}{\overset{\|}{C}}-R^1A-\right]_w-(D^1O)_{x^1}-R \qquad \text{or}$$

$$-A-\left[(D^2O)_{x^2}-\overset{O}{\overset{\|}{C}}-R^1A-\right]_w-(D^3O)_{x^3}-\overset{O}{\overset{\|}{C}}-$$

where the last radical is simultaneously substituted by two radicals $R^1$, and w is from 1 to 5, the radicals $R^1$ being subject to a random distribution, and
$y^1$ and $y^2$ being independently of each other from 0 to 20 subject to the condition that the sum $y^1 + y^2$ is from 0 to 20.

## Revendications

**1.** Application de composes de formule générale I

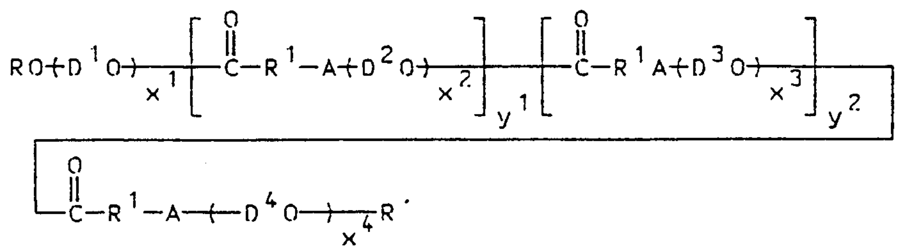

(I)

dans laquelle
R et R' sont, indépendamment l'un de l'autre, hydrogène, alkyle linéaire ou ramifié de 1 à 18 atomes de carbone qui est éventuellement substitué par chlore, brome ou alcoxy de 1 à 4 atomes de carbone; cyclopentyle; cyclohexyle; allyle; méthallyle; acryle; méthacryle; crotyle; phényle qui est mono- ou disubstitué par chlore, brome, méthyle, alcoxy de 1 à 4 atomes de carbone,

$$-(D^5O)_{x^5}-R''$$

où $x^5$ représente un nombre de 1 à 10; benzyle ou COR", où R" peut avoir l'une des significations de R mais en est indépendant,
$D^1$ à $D^5$ représentent des unités alkylène linéaires en $C_2$-$C_{10}$ ou cycliques en $C_3$-$C_{10}$ qui ne sont pas substituées ou qui sont substituées par alkyle en $C_1$-$C_4$, alcoxy en $C_1$-$C_4$ ou

$$-CH_2-(OCH_2CH_2)_p-OR,$$

où p représente un nombre de 0 à 10, ou

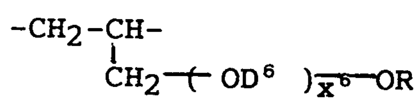

où $D^6$, indépendamment de $D^1$ à $D^5$, a les mêmes significations que ces derniers, et $x^6$ est un nombre de 1 à 100, les groupes $D^1$ à $D^5$ pouvant tous être permutés à volonté à l'intérieur d'une molécule de formule générale I représentée de façon théorique, formant ainsi une distribution statistique, $x^1$ à $x^5$ représentent indépendamment l'un de l'autre un nombre de 1 à 100,
A représente

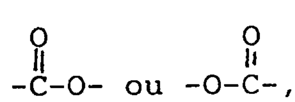

$R^1$ est 1,4-phénylène, 1,2-phénylène, 1,3-phénylène, 1,4-naphtylène, 1,8-naphtylène, 2,2'-, 2,4'-, ou 4,4'-biphénylène, alkylène linéaire ou ramifié de 2 à 18 atomes de carbone, ou alkylène cyclique de 4 à 6 atomes de carbone, tous les restes $R^1$ pouvant éventuellement être substitués par au moins un

groupe $SO_3M$ ou COOM dans lesquels M est hydrogène, un cation de la série des métaux alcalins ou un cation de la série de l'ammoniac ou des amines primaires, secondaires, tertiaires ou quaternaires; ou par

$$-(-OD^1)_{x^1}-OR \;;$$

$$-CH_2-(-OCH_2-CH_2)_p-OR\;;$$

$$-A-\left[-(D^2O)_{x^2}-\overset{O}{\overset{\|}{C}}-R^1A-\right]_w-(-D^1O)_{x^1}-R \qquad \text{ou}$$

$$-A-\left[-(D^2O)_{x^2}-\overset{O}{\overset{\|}{C}}-R^1A-\right]_w-(-D^3O)_{x^3}-\overset{O}{\overset{\|}{C}}-$$

où le dernier reste substitue simultanément deux restes $R^1$, et w est un nombre de 1 à 5, les restes $R^1$ pouvant former une distribution statistique, et
$y^1$ et $y^2$, sous réserve que la somme $y^1 + y^2$ soit comprise entre 0 et 20, représentent indépendamment l'un de l'autre un nombre de 0 à 20,
comme additifs de teinture pour la teinture et l'impression de tissus mélangés en polyester et en matières fibreuses naturelles pour empêcher la salissure de la partie en matières fibreuses naturelles par un colorant de dispersion.

2. Application selon la revendication 1, caractérisée en ce que R, R' et R" signifient hydrogène ou méthyle.

3. Application selon la revendication 1 et/ou 2, caractérisée en ce que $D^1$ à $D^6$ signifient éthylène, 1,2-propylène ou 1,4-butylène.

4. Application selon l'une ou plusieurs des revendications 1 à 3, caractérisée en ce que $x^1$ et $x^3$ à $x^6$ ont une valeur de 1 à 80 et en ce que $x^2$ a une valeur de 1 à 4.

5. Application selon l'une ou plusieurs des revendications 1 à 4, caractérisée en ce que $R^1$ signifie 1,4-phénylène, 1,3-phénylène ou 1,2-phénylène.

6. Application selon l'une ou plusieurs des revendications 1 à 5, caractérisée en ce que $y^1$ et $y^2$ ont une valeur de 1 à 10.

7. Composition de colorants ayant une teneur en colorant de 15 à 40 % en poids pour la préparation de bains de teinture, de bains de foulardage et de pâtes d'impression qui empêchent, lors de la teinture ou de l'impression de tissus mélangés en polyester et en matières fibreuses naturelles, la salissure par le colorant de dispersion de la partie en matières fibreuses naturelles, caractérisées en ce qu'elles contiennent un ou plusieurs composés de formule générale I

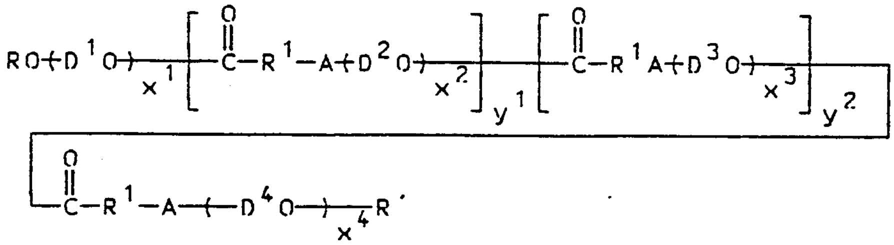

(I)

dans laquelle

R et R' sont, indépendamment l'un de l'autre, hydrogène, alkyle linéaire ou ramifié de 1 à 18 atomes de carbone qui est éventuellement substitué par chlore, brome ou alcoxy de 1 à 4 atomes de carbone; cyclopentyle; cyclohexyle; allyle; méthallyle; acryle; méthacryle; crotyle; phényle qui est mono- ou disubstitué par chlore, brome, méthyle, alcoxy de 1 à 4 atomes de carbone,

$$-(D^5O)_{x^5}R''$$

où $x^5$ représente un nombre de 1 à 10; benzyle ou COR", où R" peut avoir l'une des significations de R mais en est indépendant,

$D^1$ à $D^5$ représentent des unités alkylène linéaires en $C_2$-$C_{10}$ ou cycliques en $C_3$-$C_{10}$ qui ne sont pas substituées ou qui sont substituées par alkyle en $C_1$-$C_4$, alcoxy en $C_1$-$C_4$ ou

$$-CH_2-(OCH_2CH_2)_p-OR,$$

où p représente un nombre de 0 à 10, ou

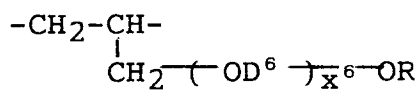

où $D^6$, indépendamment de $D^1$ à $D^5$, a les mêmes significations que ces derniers, et $x^6$ est un nombre de 1 à 100, les groupes $D^1$ à $D^5$ pouvant tous être permutés à volonté à l'intérieur d'une molécule de formule générale I représentée de façon théorique, formant ainsi une distribution statistique, $x^1$ à $x^5$ représentent indépendamment l'un de l'autre un nombre de 1 à 100,

A représente

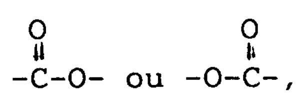

$R^1$ est 1,4-phénylène, 1,2-phénylène, 1,3-phénylène, 1,4-naphtylène, 1,8-naphtylène, 2,2'-, 2,4'-, ou 4,4'-biphénylène, alkylène linéaire ou ramifié de 2 à 18 atomes de carbone, ou alkylène cyclique de 4 à 6 atomes de carbone, tous les restes $R^1$ pouvant éventuellement être substitués par au moins un groupe $SO_3M$ ou COOM dans lesquels M est hydrogène, un cation de la série des métaux alcalins ou un cation de la série de l'ammoniac ou des amines primaires, secondaires, tertiaires ou quaternaires; ou par

$-(OD^1)_{x^1}-OR$ ;

$-OH_2-(OCH_2-CH_2)_p-OR$;

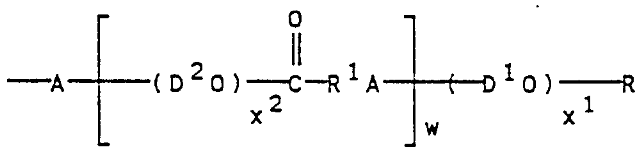

ou

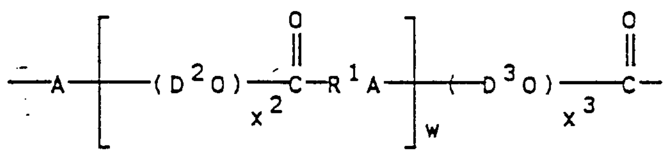

où le dernier reste substitue simultanément deux restes $R^1$, et w est un nombre de 1 à 5, les restes $R^1$ pouvant former une distribution statistique, et

$y^1$ et $y^2$, sous réserve que la somme $y^1$ + $y^2$ soit comprise entre 0 et 20, représentent indépendamment l'un de l'autre un nombre de 0 à 20.